# EUROPÄISCHE PATENTSCHRIFT

(11) **EP 2 104 200 B1**
(45) Veröffentlichungstag und Bekanntmachung des Hinweises auf die Patenterteilung: **27.02.2019**
(21) Anmeldenummer: 08005427.3
(22) Anmeldetag: 22.03.2008
(51) Int. Cl.: H02J 3/38, H02M 3/156, H02M 3/158, G05F 1/67, H02M 7/48, H02J 1/10

(54) **VERFAHREN ZUR ANSTEUERUNG EINES MULTI-STRING-WECHSELRICHTERS FÜR PHOTOVOLTAIKANLAGEN**
METHOD FOR CONTROLLING A MULTI-STRING INVERTER FOR PHOTOVOLTAIC SYSTEMS
PROCÉDÉ DE COMMANDE D'UN ONDULEUR MULTI-STRING POUR INSTALLATIONS PHOTOVOLTAÏQUES

(43) Veröffentlichungstag der Anmeldung: 23.09.2009
(73) Patentinhaber: SMA Solar Technology AG, 34266 Niestetal (DE)
(72) Erfinder: Bettenwort, Gerd, Dr., 34119 Kassel (DE); Juchem, Ralf, Dr., 34587 Felsberg (DE); Victor, Matthias, Dr., 34266 Niestetal (DE); Müller, Tobias, 34266 Niestetal (DE)

(56) Entgegenhaltungen:
- WO-A-03/038971
- US-A- 5 161 097
- US-A- 5 179 508
- MEINHARDT M ET AL: "Multi-string-converter with reduced specific costs and enhanced functionality" SOLAR ENERGY, PERGAMON PRESS. OXFORD, GB, Bd. 69, 1. Juli 2001 (2001-07-01), Seiten 217-227, XP004303022 ISSN: 0038-092X
- ALI KHAJEHODDIN S ET AL: "A Novel topology and control strategy for maximum power point trackers and multi-string grid-connected PV inverters" APPLIED POWER ELECTRONICS CONFERENCE AND EXPOSITION, 2008. APEC 2008. TWENTY-THIRD ANNUAL IEEE, IEEE, PISCATAWAY, NJ, USA, 24. Februar 2008 (2008-02-24), Seiten 173-178, XP031253244 ISBN: 978-1-4244-1873-2

## Beschreibung

Die Erfindung betrifft ein Verfahren zur Ansteuerung eines Multi-String-Wechselrichters für Photovoltaikgeneratoren einer Photovoltaikanlage, wobei der Multi-String-Wechselrichter für jeden Photovoltaikgenerator einen separaten DC/DC-Wandler umfasst sowie jeder Ausgang der DC/DC-Wandler parallel geschaltet und mit einem Eingang eines DC/AC-Wandlers verbunden ist und der DC/AC-Wandler zur Netzeinspeisung mit einem Wechselstromnetz verbunden ist.

Photovoltaikanlagen dieser Art bestehen aus mehreren Photovoltaikgeneratoren bzw. Photovoltaikmodulen zur Umwandlung der Strahlungsenergie in elektrische Energie sowie aus einem Wechselrichter, der die von den Photovoltaikmodulen gelieferte Gleichspannung in eine netzkonforme Wechselspannung umwandelt.

Mehrere Photovoltaikmodule werden dann eingesetzt, wenn die Leistung eines einzigen Moduls nicht ausreichend ist. Bei mehreren Modulen werden diese in Reihe oder parallel zu sogenannten Strings zusammengeschaltet. Da jedoch in der Regel jedes Modul oder jeder String seine maximale Leistung bei einer anderen Spannung abgibt, ist diese Verschaltung problematisch.

Unterschiedliche Arbeitspunkte der Module können sich nämlich durch eine unterschiedliche Orientierung der Module zur Sonne ergeben, beispielsweise wenn einzelne Module an verschiedenen Gebäudeseiten montiert sind oder wenn aus Platzgründen in der Gebäudeinstallation unterschiedlich große Module verwendet werden.

Auch eine teilweise Verschattung durch vorbeiziehende Wolken oder dergleichen oder durch Baumwuchs in Anlagennähe kann zu unterschiedlichen Arbeitspunkten der einzelnen Photovoltaikmodule führen.

Möglich sind auch unterschiedliche Arbeitspunkte durch Verwendung unterschiedlicher Modularten, wie kristalline, amorphe oder Farbstoff-Solarzellen oder durch fertigungsbedingte Toleranzen bei gleichartigen Modulen.

Bei einer Reihenschaltung von Photovoltaikmodulen bestimmt das Modul mit dem geringsten Strom die Höhe des Gesamtstroms. Bei der Parallelschaltung bestimmt das Modul mit der geringsten Spannung die Gesamtspannung. Dies führt dazu, dass nur für ein Modul ein optimaler Arbeitspunkt möglich ist und nur dieses seine optimale Leistung abgibt, und zwar das mit dem geringsten Strom bei Reihenschaltung oder der geringsten Spannung bei Parallelschaltung. Dadurch kann ein maximaler Wirkungsgrad der Photovoltaikanlage nicht erreicht werden.

Aus der DE 199 19 766 A1 ist ein Wechselrichter bekannt, wobei für jedes Modul bzw. jeden String ein DC/DC-Wandler vorgeschaltet ist. Dadurch können an jedem Ausgang der DC/DC-Wandler gleiche Strom- bzw. Spannungswerte bei optimierten Arbeitspunkten der Module vorliegen. Die Ausgänge aller DC/DC-Wandler werden parallel geschaltet und bilden den Eingang für einen DC/AC-Wandler.

Bekannt sind Multi-String-Wandler mit DC/DC-Wandlern, die als Hochsetzsteller ausgeführt sind. Hierbei können die nachgeschalteten DC/AC-Wandler mehrere Schaltungs-Topologien aufweisen.

In einer ersten Variante werden die DC/DC-Wandler als Hochsetzsteller ausgeführt, wobei ein nachgeschalteter DC/AC-Wandler als sogenannte 3-Level-Brücke vorhanden ist. Die Zwischenkreisspannung orientiert sich dabei an der Netzkuppenspannung und beträgt bei 230V-Netzen ca. 750V. Die Hochsetzsteller werden permanent angesteuert, so dass sie voneinander unabhängig ihren jeweiligen MPP (Maximum Power Point) suchen. Übersteigt die Eingangsspannung die mindestens erforderliche Zwischenkreisspannung, so wird die Zwischenkreisspannung mit angehoben. Der typische Eingangsspannungsbereich für diese Topologie beträgt ca. 400 - 900V.

In einer zweiten Variante werden die DC/DC-Wandler als Hochsetzsteller und der nachgeschaltete DC/AC-Wandler als H-Brücke ausgeführt. Die Zwischenkreisspannung liegt auch hierbei jeweils oberhalb der beiden Eingangsspannungen, so dass beide Hochsetzsteller unabhängig voneinander auf ihren jeweiligen MPP tracken. Die Zwischenkreisspannung orientiert sich auch hier neben der Netzkuppenspannung an den Momentanwerten der beiden Eingänge. Der typische Eingangsspannungsbereich für diese Topologie liegt bei ca. 150V - 600V.

Multi-String-Wechselricher mit unabhängigen Eingängen bieten demnach den Vorteil, dass bei unterschiedlichen Generatoren oder Einstrahlungssituationen individuell Arbeitspunkte an den beiden Eingängen gefunden werden können, so dass beide Eingänge jeweils in dem Arbeitspunkt maximaler Leistung betrieben werden.

Nachteilig ist dabei jedoch, dass in jedem Fall die Hochsetzsteller aktiv sind, auch wenn am Ausgang des Moduls bzw. Strings eine hinreichend hohe Spannung vorliegt, so dass zu jedem Zeitpunkt und in allen Betriebszuständen Hochsetzstellerverluste entstehen mit der Folge, dass der Wirkungsgrad bzw. die Gesamtenergieausbeute der Anlage nicht immer optimal ist.

Bei Gebäudeinstallationen kann es vorkommen, dass aus Platzgründen unterschiedlich große oder verschiedenartige Module zum Einsatz kommen, deren Ausgangsspannung sich stark unterscheidet. Aus der DE 101 20 595 B4 ist eine Lösung bekannt, bei der bei zwei Modulen bzw. Strings der Spannungsunterschied des Moduls mit der geringeren Spannung durch einen DC/DC-Wandler, der als Hochsetzsteller ausgeführt ist, ausgeglichen wird. Auch hier können beide Module mit verbessertem Wirkungsgrad betrieben werden. Nachteilig ist, dass diese Lösung nur für zwei Module von Vorteil ist und auch hierbei der Hochsetzsteller permanent betrieben wird. Das heißt, auch bei diesem Verfahren entstehen im DC/DC-Wandler permanent Verluste durch Betätigung des Hochsetzsteller-Schalters.

Die WO 2007 124 518 A1 zeigt eine Schaltungsanordnung und beschreibt ein Steuerverfahren für einen Photovoltaikwechselrichter mit einem Eingang. Die Schaltung umfasst einen Tiefsetzsteller zur Umwandlung der Gleichspannung des Photovoltaikgenerators in eine Gleichspannung, die für eine nachgeschaltete Brückenschaltung zur Umwandlung der Gleichspannung in eine Wechselspannung geeignet ist. Wenn die Gleichspannung des Photovoltaikgenerators einen Grenzwert unterschreitet, wird der Tiefsetzsteller inaktiv und ein Schalter, parallel zum Schalter des Tiefsetzstellers, wird geschlossen. Ein zusätzlicher Schalter überbrückt den Tiefsetzsteller. Dadurch soll der Wirkungsgrad des Tiefsetzstellers bzw. des Wechselrichters erhöht werden. Nachteilig bei diesem Verfahren ist jedoch, dass ein zusätzlicher Überbrückungs-Schalter sowie eine zusätzliche Steuereinheit für diesen Schalter erforderlich ist. Es sind also zusätzliche Baugruppen erforderlich. Zudem fallen auch im Überbrückungs-Schalter Verluste an.

Aus der Veröffentlichung "Multi-String-converter with reduced specific costs and enhanced functionality", Mike Meinhardt et al, SOLAR ENERGY, PERGAMON PRESS, OXFORD, GB, Bd. 69, 1. Juli 2001, Seiten 217 - 227, ist eine Photovoltaikanlage mit mehreren Strings bekannt. Den Strings ist jeweils ein DC/DC-Wandler zugeordnet. Die DC/DC-Wandler sind parallel geschaltet. Durch eine individuelle MPP-Einstellung kann eine unterschiedliche Einstrahlung oder Verschattung der Photovoltaikmodule berücksichtigt werden. Der Nachteil auch dieser Schaltung ist, dass die DC-DC-Wandler immer aktiv sind, so dass sie immer Verluste verursachen. Die US-A-5 179 508 beschreibt einen DC/DC-Wandler. Dieser kann für einen Photovoltaikgenerator eingesetzt werden. Dieses System soll in erster Linie einen sehr weiten Eingangsspannungsbereich erlauben und dabei einen günstigen Wirkungsgrad aufweisen bzw. es soll eine sehr kleine Eingangsspannung verwendbar sein, ohne dass der Wirkungsgrad verschlechtert wird. Zur Lösung dieses Problems wird hier vorgeschlagen, dass eine vorgeschaltete Zusatzschaltung, und zwar ein "standby boost converter", also praktisch ein zweiter vorgeschalteter DC-DC-Wandler eingesetzt wird, der einem ersten DC-DC-Wandler vorgeschaltet wird. Diese Schaltung besteht also aus zwei nacheinander angeordneten DC-DC- Wandlern, und zwar aus einem zweiten DC-DC-Hochsetzsteller bzw. "boost converter" und einem Haupt-DC/DC-Wandler. Wenn die Spannung der Gleichspannungsquelle einen Wert übersteigt, dann soll der zweite DC-DC- Wandler abgeschaltet werden, so dass in diesem Betriebszustand nur ein Strom über eine überbrückende Diode geführt wird.

Der Erfindung liegt die Aufgabe zugrunde, ein Verfahren zur Steuerung eines Wechselrichters der genannten Art anzugeben, mit dem der Wirkungsgrad der Photovoltaikanlage in einfacher Weise verbessert wird.

Diese Aufgabe wird dadurch gelöst, dass an jedem DC/DC-Wandler eine oder mehrere elektrische Größen, und zwar Eingangsstrom, Eingangsspannung und/oder Eingangsleistung gemessen werden und in Abhängigkeit von dieser Messung zumindest einer der DC/DC-Wandler bei Überschreiten eines Grenzwertes und/oder beim Vorliegen von Größen der DC/DC-Wandler innerhalb eines Fensters seinen Betriebszustand dadurch ändert, dass der erste Wandler deaktiviert wird, wenn eine Eingangsspannung des ersten Wandlers oberhalb einer Netzkuppenspannung und oberhalb der Eingangsspannung der übrigen Wandler liegt, sowie weitere der DC/DC-Wandler (2a, 2b) deaktiviert werden, wenn deren Eingangsspannungen innerhalb eines gemeinsamen Spannungsfensters mit dem ersten Wandler liegen, wobei der Arbeitspunkt der Photovoltaikgeneratoren der deaktivierten Wandler über den DC/AC-Wandler (3) optimiert wird.

Indem unter bestimmten Bedingungen ein verlustarmer Betriebszustand individuell für jeden DC/DC-Wandler eingestellt werden kann, ist es möglich, den Wirkungsgrad zu erhöhen.

Die Erfindung beruht auf dem Gedanken, dass innerhalb des Steuerungsverfahrens für die DC/DC-Wandler zusätzliche Zustände definiert werden, in denen die betreffenden DC/DC-Wandler des Multistringwechselrichters nur dann aktiv sind, wenn sich dadurch ein energetisches Maximum der Gesamtanlage ergibt.

Es können also Bedingungen festgelegt werden, zu denen die DC/DC-Wandler aktiv oder nicht aktiv sein sollen. Wenn ein DC/DC-Wandler nicht aktiv wird, wird der Arbeitspunkt der DC-Seite nicht über den DC/DC-Wandler, sondern über den Zwischenkreis eingestellt. Die Generatorspannung und die Zwischenkreisspannung sind dann gleich. Die Eingänge der DC/DC-Wandler können dabei individuell aber auch gemeinsam behandelt werden.

Erfindungsgemäß wird in Abhängigkeit von einer Messung zumindest an einem der DC/DC-Wandler bei Überschreiten eines Grenzwertes und/oder Fensters sein Betriebszustand geändert.

Das Überschreiten eines Grenzwertes kann ein Überschreiten der Netzkuppenspannung sein. Eine Änderung des Betriebszustandes ergibt sich zum Beispiel, wenn eine erste Generatorspannung sowohl ausreichend oberhalb der Netzkuppenspannung als auch oberhalb einer zweiten Generatorspannung liegt. Der erste DC/DC-Wandler kann dann deaktiviert werden, so dass sein Arbeitspunkt über die Zwischenkreisspannung eingestellt wird. Der zweite DC/DC-Wandler bleibt dann aber aktiv. Durch die Deaktivierung des ersten DC/DC-Wandlers werden dessen Verluste eingespart, so dass der Wirkungsgrad der gesamten Schaltungsanordnung des String-Wechselrichters erhöht wird.

Das Vorliegen von Größen der DC/DC-Wandler innerhalb eines Fensters ergibt sich, wenn Eingangsspannungen der DC/DC-Wandler innerhalb eines Spannungsbandes bzw. Spannungsfensters liegen. Beispielsweise kann eine Änderung des Betriebszustandes erfolgen, wenn beide Eingangsspannungen der DC/DC-Wandler, d.h. beide Generatorspannungen, trotz individueller Arbeitspunkteinstellung für eine definierte Zeit in einem engen Spannungsband liegen und ihr Absolutwert oberhalb der Netzkuppenspannung liegt. In diesem Fall können sogar beide DC/DC-Wandler deaktiviert werden, so dass die Arbeitspunkte beider Eingänge der DC/DC-Wandler parallel über die Zwischenkreisspannung eingestellt werden. Eine individuelle Einstellung eines Photovoltaikmoduls bzw. Strings ist dann nicht vorgesehen. Weil trotz eines möglichen, nicht optimalen Arbeitspunktes für die Einzelstrings sich eine höhere Minimierung der Verluste in den DC/DC-Wandlern ergibt, wird ein energetisches Maximum für das Gesamtgerät erreicht und somit der Wirkungsgrad verbessert. Wenn sich die Umgebungsbedingungen für die Eingänge der DC/DC-Wandler dann wieder ändern, d.h. zum Beispiel ein Generator eine höhere Leistung liefert, wird eine individuelle Einstellung der DC/DC-Wandler durchgeführt. Dies kann aus der Änderung des Leistungsverhältnisses zwischen den beiden Strings abgeleitet werden. Beide DC/DC-Wandler werden also dann wieder aktiviert.

Erfindungsgemäß werden die elektrischen Eingangsgrößen Strom, Spannung und/oder Leistung der DC/DC-Wandler gemessen und in Abhängigkeit von definierten Auslösekriterien die Betriebszustände des Multi-String-Wechselrichters angepasst.

Als Auslösekriterium für die Anpassung des Betriebszustandes wird eine Änderung des Verhältnisses mindestens einer der elektrischen Eingangsgrößen von mindestens zwei DC/DC-Wandlern gewertet.

Die DC/DC-Wandler sowie der DC/AC-Wandler können in einem Gehäuse integriert sein, aber auch getrennt ausgeführt werden.

Weitere vorteilhafte Ausgestaltungen der Erfindung sind in den Unteransprüchen gekennzeichnet.

In einer vorteilhaften Weiterbildung des erfindungsgemäßen Verfahrens ist vorgesehen, dass zumindest einer der DC/DC-Wandler seinen Betriebszustand ändert, indem ein Schaltelement des DC/DC-Wandlers nicht permanent angesteuert wird und so abgeschaltet bzw. eingeschaltet wird, dass seine Eingangsspannung im Wesentlichen seiner Ausgangsspannung entspricht. Dadurch entstehen auch keine Schaltverluste in dem Halbleiterschalter selbst, was den Wirkungsgrad der Gesamtanlage erhöht.

Besonders günstig ist es, wenn mindestens einer der DC/DC-Wandler abgeschaltet wird, an dem die höchste Eingangsspannung anliegt, wobei diese oberhalb einer Netzkuppenspannung liegt. Der Arbeitspunkt des an diesem DC/DC-Wandler angeschlossenen Photovoltaikmoduls kann dann über die Zwischenkreisspannung eingestellt werden. Im abgeschaltetem Zustand entspricht die Eingangsspannung des DC/DC-Wandlers etwa seiner Ausgangsspannung.

Vorteilhaft ist es, dass mindestens zwei DC/DC-Wandler abgeschaltet werden, wenn beide Eingangsspannungen der DC/DC-Wandler innerhalb eines engen Spannungsfensters liegen. Wenn also beide Generatorspannungen trotz individueller Arbeitspunkteinstellung für eine definierte Zeit in einem engen Spannungsband liegen, können beide DC/DC-Wandler abgeschaltet werden, was eine deutliche Reduzierung der Verluste bewirkt. Eine Optimierung der Arbeitspunkte beider Photovoltaikgeneratoren kann über den DC/AC-Wandler erfolgen. Zweckmäßigerweise erfolgt dies, wenn an den beiden DC/DC-Wandlern eine Eingangsspannung anliegt, die oberhalb der Netzkuppenspannung liegt.

In einer weiteren bevorzugten Ausgestaltung der Erfindung ist vorgesehen, dass mindestens einer der DC/DC-Wandler wieder aktiviert wird, wenn die Eingangsspannung des DC/AC-Wandlers in den Bereich der Netzkuppenspannung fällt, wenn ein Leistungsverhältnis der Photovoltaikgeneratoren sich oberhalb eines Grenzwertes ändert und/oder wenn eine definierte Zeit abgelaufen ist. Diese Reaktivierung sorgt dafür, dass eine individuelle Anpassung der Arbeitspunkte der Photovoltaikgeneratoren möglich ist.

Günstig ist es weiterhin, wenn ein Maximum Power Tracking mit einer Verschattungserkennung für die Photovoltaikgeneratoren eingesetzt wird, so dass bei mehreren Leistungsmaxima der günstigere Arbeitspunkt eingestellt wird. Die angepassten Betriebszustände ermöglichen, dass verschattete Photovoltaikgeneratoren erkannt und daraufhin das Maximum Power Tracking so beeinflusst wird, dass ein energetisch günstigerer Arbeitspunkt eingenommen wird. Dies ist beispielsweise durch eine Vergrößerung des Suchbereiches des Maximum Power Trackings gegenüber üblichen Suchbereichen möglich.

In einer Weiterbildung des erfindungsgemäßen Verfahrens wird zwischen mehreren Maximum Power Tracking Verfahren umgeschaltet. Es kann also von einem ersten Maximum Power Tracking Verfahren auf ein zweites Maximum Power Tracking Verfahren umgeschaltet werden, wenn bestimmte Betriebszustände der DC/DC-Wandler eintreten bzw. einer dieser DC/DC-Wandler nicht permanent angesteuert wird. Dadurch kann der Wirkungsgrad weiter verbessert werden.

Eine weitere bevorzugte Ausgestaltung der Erfindung ist dadurch gekennzeichnet, dass jeder DC/DC-Wandler als Hochsetzsteller ausgeführt ist. Dies ist insofern vorteilhaft, als für den deaktivierten Fall der Schalter - also wenn der Halbleiterschalter des Hochsetzstellers in einfacher Weise nicht mehr angesteuert wird, d.h. nicht mehr geschlossen wird - kaum Verluste anfallen. Eine elektrische Verbindung zwischen dem Pluspol und dem Minuspol des Photovoltaikgenerators und dem Zwischenkreis besteht dann über eine Drossel und eine Diode des Hochsetzstellers.

Eine Verbesserung des Wirkungsgrades der Photovoltaikanlage wird dadurch erreicht, dass in einem inaktiven Betriebszustand zumindest eines der DC/DC-Wandler ein zusätzlicher Schalter zur Überbrückung eines Halbleiterschaltelementes, einer Diode und/oder einer Drossel eingeschaltet wird.

Eine Reihenschaltung einer Drossel und einer Diode, insbesondere eines Hochsetzstellers kann über diesen zusätzlichen Schalter überbrückt werden. Für diese Variante ist ein zusätzlicher Schalter mit einer entsprechenden Ansteuerung erforderlich. Verluste fallen dann nicht mehr in der Drossel und der Diode des Hochsetzstellers an, sondern nur noch im zusätzlichen Schalter. Diese Verluste können jedoch erheblich kleiner oder sogar vernachlässigbar klein sein. Der zusätzliche Schalter kann ein mechanischer Schalter, ein Halbleiterschalter oder eine Diode mit kleiner Flussspannung sein. Mit dem zusätzlichen Schalter zur Überbrückung von DC/DC-Wandlerkomponenten können auch andere DC/DC-Wandlerarten eingesetzt werden. Der Halbleiterschalter des entsprechenden DC/DC-Wandlers wird dann nicht mehr getaktet, wobei Komponenten, insbesondere eine Drossel und/oder eine Diode, durch den zusätzlichen Schalter überbrückt werden. Die DC/DC-Wandler können dadurch als Hochsetzsteller, Tiefsetzsteller oder sogenannte Sepic- oder Zeta-Wandler ausgeführt sein, wobei die gewünschte Verbesserung des Wirkungsgrades erreicht wird.

Als zusätzlicher Schalter kann auch ein Relais oder ein vergleichbarer mechanischer Schalter eingesetzt werden, der praktisch verlustfrei die entsprechenden Komponenten überbrückt. Ein mechanischer Schalter ist daher möglich, weil Änderungen der Generatorspannungen durch Verschattung oder Ähnliches relativ langsam stattfinden. Aber auch ein geeigneter Halbleiterschalter, wie ein MOSFET-Schalter, ist möglich.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine Prinzipdarstellung einer Schaltungsanordnung einer Photovoltaikanlage mit einem Multistring-Wechselrichter mit zwei unabhängigen Eingängen,
- Fig. 2: eine Darstellung von Spannungsverläufen am Ausgang von Photovoltaikgeneratoren, eines Zwischenkreises sowie die zugehörigen Scheitelwerte einer Netzspannung in Abhängigkeit von der Zeit,
- Fig. 3: eine Darstellung von Spannungsverläufen am Ausgang von Photovoltaikgeneratoren, die Spannung des Zwischenkreises in Abhängigkeit von der Zeit t für die in Fig. 1 dargestellte Schaltungsanordnung sowie einen Verlauf des Leistungsverhältnisses zwischen den einzelnen Strings,
- Fig. 4a: einen DC/DC-Wandler zur Verwendung in dem Multi-String-Wechselrichter, der als Hochsetzsteller ausgeführt ist,
- Fig. 4b: eine erste Variante des DC/DC-Wandlers zur Verwendung in dem Multi-String-Wechselrichter, der als Hochsetzsteller ausgeführt und mit einem zusätzlichem Schalter zur Überbrückung einer Diode versehen ist,
- Fig. 4c: eine zweite Variante des DC/DC-Wandlers zur Verwendung in dem Multi-String-Wechselrichter, der als Hochsetzsteller ausgeführt und mit einem zusätzlichem Schalter zur Überbrückung der Diode und einer Drossel versehen ist,
- Fig. 5a: einen DC/DC-Wandler zur Verwendung in dem Multi-String-Wechselrichter, der als Tiefsetzsteller ausgeführt ist und mit einem zusätzlichen Schalter zur Überbrückung der Diode und einer Drossel versehen ist,
- Fig. 5b: eine Variante des DC/DC-Wandlers, der als Tiefsetzsteller ausgeführt und mit einem zusätzlichen Schalter zur Überbrückung des Halbleiterschalters und einer Drossel versehen ist,
- Fig. 6: eine Variante des DC/DC-Wandlers, der als Zeta-Wandler ausgeführt und mit einem zusätzlichen Schalter zur Überbrückung eines Halbleiterschalters und eines Kondensators versehen ist,
- Fig. 7: eine Variante des DC/DC-Wandlers, der als Sepic-Wandler ausgeführt und mit einem zusätzlichen Schalter zur Überbrückung einer Diode und eines Kondensators versehen ist und
- Fig. 8: einen Spannungs- sowie Leistungsverlauf an den Eingängen der des DC/DC-Wandlers.

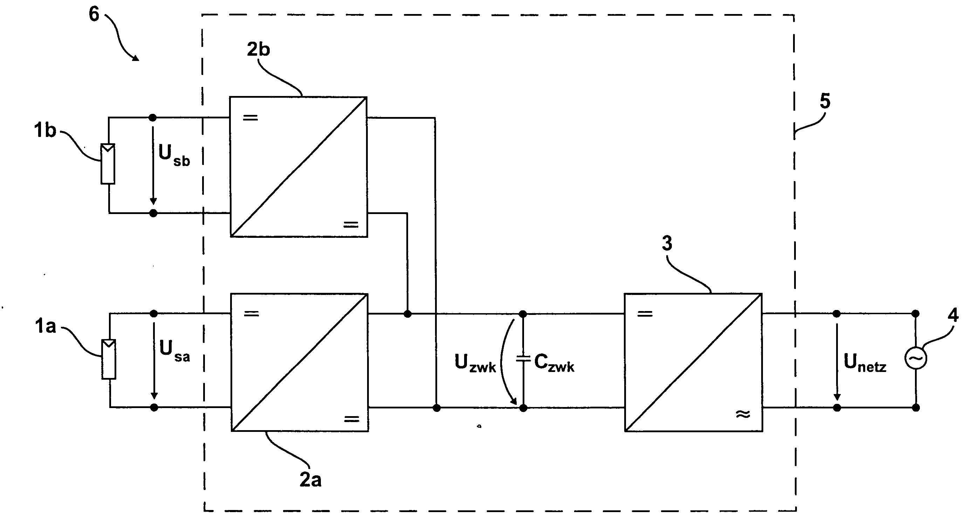

Fig. 1 veranschaulicht eine Schaltungsanordnung einer Photovoltaikanlage 6. Diese umfasst einen Multi-String-Wechselrichter mit zwei unabhängigen Eingängen. Die Photovoltaikanlage 6 ist beispielhaft mit zwei Photovoltaikgeneratoren 1a, 1b versehen.

Die Photovoltaikgeneratoren 1a, 1b können aus einem oder mehreren Photovoltaikmodulen zusammengesetzt sein, die in Reihe, parallel oder beide zu Strings zusammengeschaltet sind. Jedem dieser Photovoltaikgeneratoren 1a, 1b ist ein DC/DC-Wandler 2a, 2b nachgeschaltet, so dass dem DC/DC-Wandler 2a der Photovoltaikgenerator 1a und dem DC/DC-Wandler 2b der Photovoltaikgenerator 1b zugeordnet ist. Die Photovoltaikgeneratoren 1a, 1b liefern die Spannungen Usa und Usb. Die Ausgänge der DC/DC-Wandler 2a, 2b sind parallelgeschaltet, so dass nur eine einzige Zwischenkreisspannung Uzwk vorhanden ist. Parallel zu den Ausgängen der DC/DC-Wandler 2a, 2b liegt ein Zwischenkreiskondensator Czwk, der von den DC/DC-Wandlern 2a, 2b gespeist wird. Dem Zwischenkreiskondensator Czwk folgt ein DC/AC-Wandler 3, der ausgangsseitig eine Netzspannung Unetz liefert und mit einem Energieversorgungsnetz 4 verbunden ist.

Der DC/AC-Wandler 3 ist mit einer Brückenschaltung versehen und kann ausgangsseitig einen Netzfilter enthalten, der hier nicht dargestellt ist. Aufgabe des DC/AC-Wandlers 3 ist die ausgangsseitige Bereitstellung einer netzkonformen Wechselspannung von beispielsweise 110 Volt oder 230 Volt und 50 Hz oder 60 Hz zur Einspeisung dieser Wechselspannung in das Energieversorgungsnetz 4. Dieses Energieversorgungsnetz 4 kann das öffentliche Netz oder ein Inselnetz sein. Die beiden DC/DC-Wandler 2a und 2b, der Zwischenkreiskondensator Czwk sowie der DC/AC-Wandler 3 können in ein Gehäuse eines Multi-String-Gerätes 5 integriert sein. Eine separate Ausführung ist jedoch auch möglich.

Die in Fig. 1 gezeigte Photovoltaikanlage 6 enthält nur zwei Strings und damit auch nur zwei DC/DC-Wandler 2a, 2b. Es können aber auch mehr als zwei Strings und damit auch mehr als zwei DC/DC-Wandler vorhanden sein.

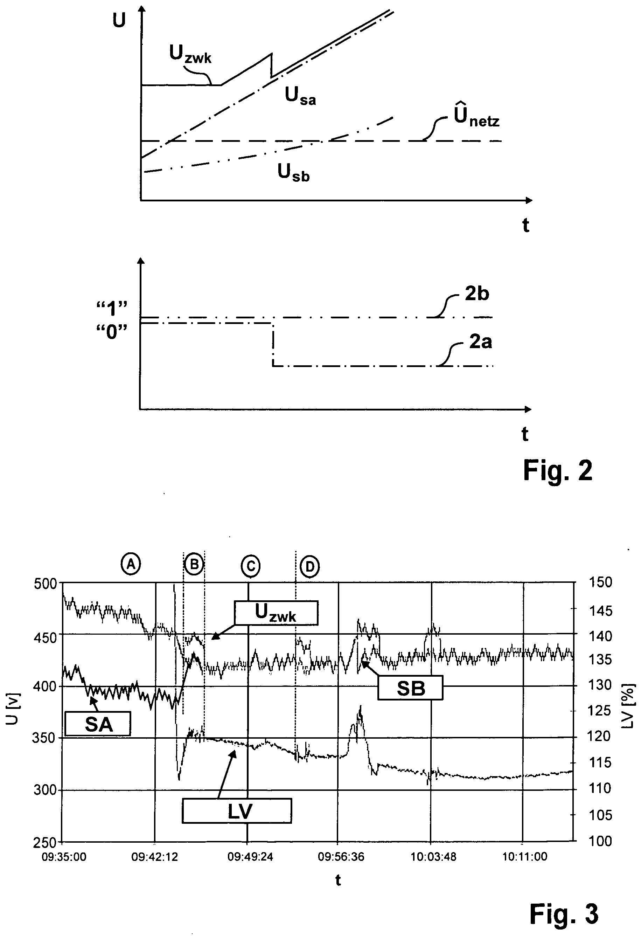

Die Fig. 2 und die Fig. 3 zeigen prinzipielle mögliche Spannungsverläufe für die in Fig. 1 dargestellte Schaltungsanordnung. In Fig. 1 sind die Abgriffe der in Fig. 2 und Fig. 3 dargestellten Spannungen Usa, Usb eingezeichnet. Beide dienen zur Erläuterung des Verfahrens von Zu- und Abschaltung von DC/DC-Wandlern 2a, 2b sowie der Beschreibung der auslösenden Zustände.

Fig. 2 zeigt mögliche Verläufe der Spannungen Usa und Usb an den Photovoltaikgeneratoren 1a und 1b, die sich ergebende Zwischenkreisspannung Uzwk sowie den Scheitelwert (=Kuppe) Ünetz der Netzspannung Unetz. Wenn, wie in Fig. 2 dargestellt ist, beispielsweise die Generatorspannung Usa sowohl ausreichend oberhalb der Netzkuppenspannung Ûnetz als auch oberhalb der zweiten Generatorspannung Usb liegt, dann kann der zugehörige DC/DC-Wandler 2a deaktiviert werden. Damit wird der DC-Arbeitspunkt über die Zwischenkreisspannung Uzwk eingestellt, d.h. die Generatorspannung Usa und die Zwischenkreisspannung Uzwk sind gleich. Der Arbeitspunkt des zweiten Eingangs, d.h. des Photovoltaikgenerators 1b, wird über dessen aktiven DC/DC-Wandler 2b eingestellt. Hierdurch werden die Verluste des DC/DC-Wandlers 2a eingespart. Der Wirkungsgrad der gesamten Anlage steigt damit deutlich an. In Fig. 2 ist der aktivierte Zustand mit "1" und der deaktivierte Zustand mit "0" gekennzeichnet.

Fig. 3 zeigt mögliche Spannungsverläufe am Ausgang der Photovoltaikgeneratoren 1a, 1b bzw. Strings SA, SB, des Zwischenkreises für die in Fig. 1 dargestellte Schaltungsanordnung sowie den Verlauf des Leistungsverhältnisses LV zwischen den Strings bzw. den Photovoltaikgeneratoren 1a, 1b. Dabei kann in vier zeitlich aufeinander folgende Bereiche A bis C unterschieden werden.

Im Bereich A liegen beide Photovoltaik-Generatorspannungen Usa und Usb oberhalb der Netzkuppenspannung Ûnetz von beispielsweise 325V und haben einen deutlichen Abstand zueinander. Die Netzkuppenspannung Ûnetz ist in Fig. 3 nicht eingezeichnet. In diesem Zustand ist der DC/DC-Wandler 2a aktiv. Der zweite DC/DC-Wandler 2b ist deaktiviert, und der Arbeitspunkt des Generators 1b bzw. Strings wird über den Zwischenkreis eingestellt. Am Ende des Bereichs A nähern sich beide Photovoltaikspannungen an.

Im Bereich B wird deshalb der DC/DC-Wandler 2b des zweiten Generators 1b eingeschaltet, damit beide Strings ihre individuellen Arbeitspunkte einstellen können. Die Zwischenkreisspannung Uzwk liegt oberhalb der höheren Photovoltaikspannung.

Am Ende des Bereiches B sind beide Photovoltaikspannungen für eine definierte Zeit innerhalb eines definierten Spannungsbereiches.

Im Bereich C werden deshalb beide DC/DC-Wandler 2a, 2b abgeschaltet und die Arbeitspunkte über den Zwischenkreis gemeinsam eingestellt.

Im Bereich D hat sich das Leistungsverhältnis zwischen den beiden Eingängen signifikant verändert, so dass beide DC/DC-Wandler 2a, 2b wieder aktiv werden und die Arbeitspunkte individuell einstellen.

Trotz des im zeitlichen Verlauf nicht immer optimalen individuellen Arbeitspunktes für die Generatoren 1a oder 1b ergibt sich durch die Einsparung der DC/DC-Wandler-Verluste ein energetisches Maximum für das Gesamtgerät. Ändern sich derweil die Umgebungsbedingungen für die beiden Eingänge und wird daher eine individuelle Behandlung erforderlich, so kann dies z.B. aus der Änderung des Leistungsverhältnisses zwischen den beiden Generatoren 1a, 1b abgeleitet werden, und die DC/DC-Wandler 2a, 2b werden wieder aktiviert.

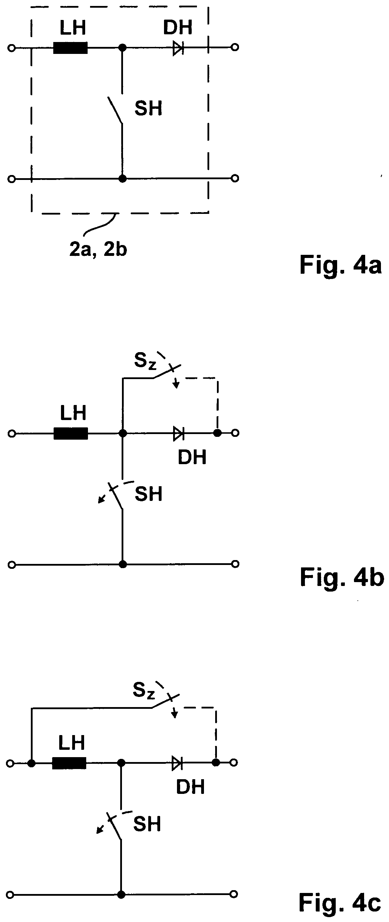

Die in Fig. 1 gezeigten DC/DC-Wandler 2a, 2b werden bevorzugt als Hochsetzsteller ausgeführt. Eine bevorzugte Schaltungsanordnung der Hochsetzsteller zeigt Fig. 4a. Der Hochsetzsteller besteht aus einer Drossel LH und einer in Reihe geschalteten Diode DH; dabei ist die Anode der Diode mit der Drossel LH verbunden. Am Verknüpfungspunkt beider Komponenten ist ein Halbleiterschalter SH angeschlossen, der mit dem Minuspol verbunden ist. Durch Taktung des Halbleiterschalters SH kann die Ausgangsspannung bzw. der Ausgangsstrom des Hochsetzstellers verändert werden.

Ist der Hochsetzsteller nicht aktiv, bleibt der Schalter SH offen. Der Pluspol des eingangsseitig angeschlossenen Photovoltaikgenerators ist mit einem ausgangsseitigen, und hier nicht eingezeichneten ZwischenkreisKondensator Czwk über die Drossel LH und die Diode DH verbunden.

Fig. 4b zeigt eine Variante der Schaltungsanordnung des Hochsetzstellers für die DC/DC-Wandler 2a bzw. 2b mit einem zusätzlichen Schalter Sz zur Überbrückung der Diode DH.

Der Schalter Sz kann auch die Reihenschaltung aus Drossel LH und Diode DH überbrücken, wie durch die Fig. 4c veranschaulicht wird.

Bei den Schaltungen gemäß Fig. 4b oder Fig. 4c sind zwei Betriebszustände möglich.

Im ersten Betriebszustand wird der Halbleiterschalter getaktet bzw. angesteuert, wobei der Überbrückungsschalter Sz geöffnet ist.

Im zweiten Betriebszustand wird der Halbleiterschalter nicht getaktet bzw. nicht angesteuert, sondern bleibt geöffnet, wobei der Überbrückungsschalter Sz geschlossen ist.

Eine nicht gezeigte Messeinrichtung misst elektrische Größen, zum Beispiel die Ausgangsspannungen Usa, Usb der Generatoren 1a und 1b und ihre Ströme. Eine Steuereinheit steuert in Abhängigkeit der gemessenen Größen und von definierten Grenzwerten oder Fenstern die Schalter SH und Sz.

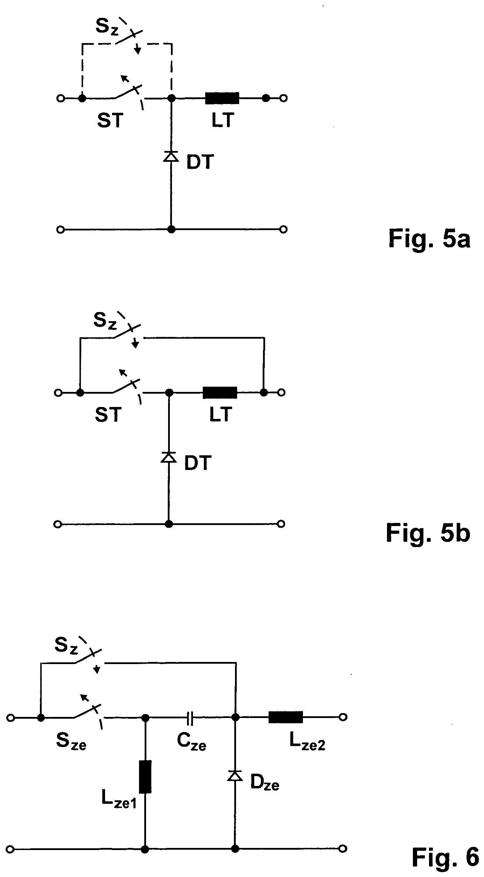

Fig. 5a zeigt einen DC/DC-Wandler 2a bzw. 2b, der als Tiefsetzsteller ausgeführt ist. Ein Halbleiterschalter ST und eine Drossel LT sind in Reihe geschaltet. Am Verknüpfungspunkt beider Komponenten ist eine Diode DT angeschlossen, deren Anode mit dem Minuspol verbunden ist.

Wenn der Tiefsetzsteller inaktiv ist, dann ist sein Halbleiterschalter ST geöffnet. Ein zusätzlicher Schalter Sz, der parallel zum Halbleiterschalter ST geschaltet ist, wird dann geschlossen und dient zur Überbrückung des Tiefsetzsteller-Schalters ST.

Soll auch die Drossel LT überbrückt werden, ist der zusätzliche Schalter Sz parallel zum Halbleiterschalter ST und der Drossel LT geschaltet, was in Fig. 5b gezeigt ist.

Fig. 6 zeigt einen DC/DC-Wandler 2a, 2b, der als Zeta-Wandler ausgeführt ist. Der Zeta-Wandler besteht aus einer Reihenschaltung aus einem Halbleiterschalter Sze, einem Kondensator Cze und einer Drossel Lze2. Am Verknüpfungspunkt von Sze und Cze ist eine Drossel Lze1 angeschlossen, die auch mit dem Minuspol verbunden ist. Am Verknüpfungspunkt von Cze und Lze ist mit der Kathode eine Diode Dze angeschlossen, deren Anode mit dem Minuspol verbunden ist.

Für diesen Wandler ist ebenfalls ein zusätzlicher Schalter Sz zur Überbrückung von Komponenten erforderlich. Ist der Zeta-Wandler nicht aktiv, ist der Schalter Sze geöffnet. Der zusätzliche Schalter Sz wird in diesem Fall geschlossen und überbrückt dann mindestens den Schalter Sze sowie den Kondensator Cze. Prinzipiell kann die Überbrückung auch auf die Drossel Lze2 erweitert werden.

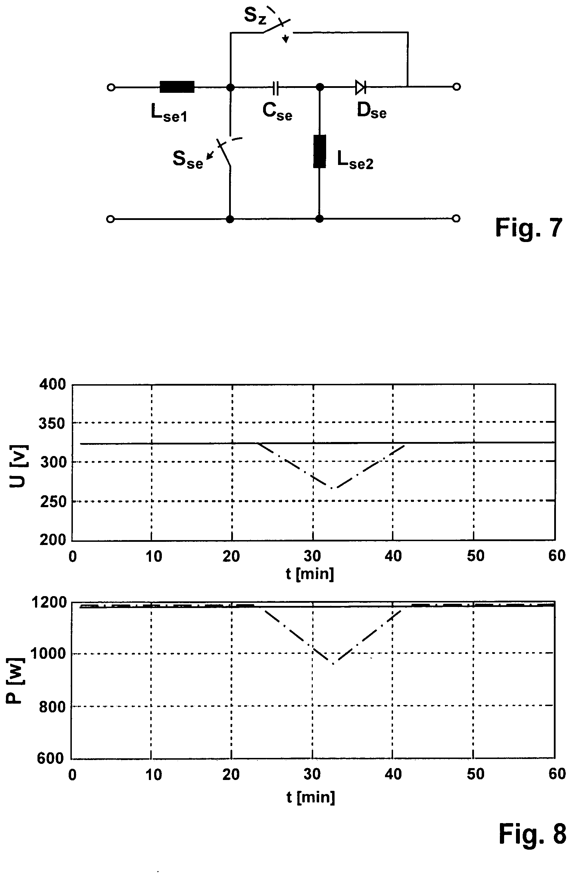

Fig. 7 veranschaulicht ein Beispiel, bei dem jeder DC/DC-Wandler 2a, 2b als Sepic-Wandler ausgeführt ist. Der Sepic-Wandler umfasst eine Drossel Lse1, einen Kondensator Cse und eine Diode Dse, die in Reihe geschaltet sind. Der Halbleiterschalter Sse liegt zwischen dem Verknüpfungspunkt der Drossel Lse1 und des Kondensators Cse und dem Minuspol. Eine weitere Drossel Lse2 ist zwischen dem Verknüpfungspunkt der Anode der Diode Dse und des Kondensators Cse und dem Minuspol geschaltet.

Der Sepic-Wandler ist mit einem zusätzlichem Schalter Sz zur Überbrückung von Komponenten vorgesehen. Insbesondere überbrückt dieser den Kondensator Cse und die Diode Dse, wenn er geschlossen ist. Wenn der Sepic-Wandler einen Betriebszustand erreicht, in dem der Halbleiterschalter Sse nicht permanent angesteuert wird, dann wird der zusätzliche Schalter Sz geschlossen, so dass ein Strom durch die erste Drossel Lse1 und den Schalter Sz in den DC/AC-Wandler 3 fließen kann. Möglich ist auch, dass der zusätzliche Schalter Sz die erste Drossel Lse1 zusätzlich überbrückt.

Im inaktiven Betriebszustand ist der Halbleiterschalter Sse geöffnet. Der Halbleiterschalter Sse wird also nicht permanent angesteuert. Im aktiven Betriebszustand wird der Halbleiterschalter Sse getaktet, und zwar derart, dass ein Leistungsmaximum für den entsprechenden DC/DC-Wandler individuell eingestellt wird.

Diese Variante ist also dadurch gekennzeichnet, dass alle DC/DC-Wandler als Sepic-Wandler ausgeführt und pro inaktiven Sepic-Wandler ein zusätzlicher Schalter Sz zur Überbrückung der Sepic-Wandler-Kapazität und der Sepic-Wandlerdiode Dse geschlossen wird.

Alternativ ist diese Variante dadurch gekennzeichnet, dass alle DC/DC-Wandler als Sepic-Wandler ausgeführt und pro inaktiven Sepic-Wandler ein zusätzlicher Schalter Sz zur Überbrückung der Sepic-Wandler-Kapazität und der Sepic-Wandlerdiode Dse und der Sepic-Wandler-Drossel Lse1 geschlossen wird.

Fig. 8 veranschaulicht einen zeitlichen Verlauf der Spannungen Usa, Usb bzw. der Leistungen Psa, Psb an den Eingängen der DC/DC-Wandler 2a, 2b, wie er sich bei einer Schaltungsanordnung nach Fig. 1 einstellen kann. Die durchgezogenen Linien kennzeichnen die Messgrößen eines unverschatteten Photovoltaikgenerators. Die strichpunktierten Linien kennzeichnen den anderen Generatorstring, der zeitweise verschattet ist.

In den ersten 20 Minuten des beobachteten Zeitfensters verlaufen beide Spannungen Usa, Usb beider Eingänge gleichförmig. Nach etwa 20 Minuten prägt sich ein Schatten auf einem Photovoltaikgenerator 1a oder 1b aus. Dieser bewirkt ein Auseinanderdriften der Leistungen zwischen den Generatoren und wird hier als Verschattung erkannt, da ein festgelegtes Toleranzband der Leistungsverhältnisse der Photovoltaikgeneratoren 1a und 1b verlassen wird.

Werden möglichst gleiche Photovoltaikmodule 1a und 1b eingesetzt, hat dies den Vorteil, dass die DC/DC-Wandler nur dann aktiv sind bzw. nur einer der DC/DC-Wandler nur dann aktiv ist, wenn eine unterschiedliche Verschattung an den Modulen eintritt. Dadurch kann der Wirkungsgrad erheblich verbessert werden. Ein MPP-Punkt der Photovoltaikgeneratoren 1a, 1b kann bei inaktiven DC/DC-Wandlern 2a, 2b dann über den DC/AC-Wandler 3 eingestellt werden.

Um zu einem optimalen Arbeitspunkt der Anlage zu gelangen, führt der DC/AC-Wandler 3 ein MPP-Verfahren durch. Vorzugsweise stellt er bei mehreren Leistungsmaxima immer den höheren Arbeitspunkt ein. Mehrere Maxima können vorkommen, wenn eine Teilverschattung der Photovoltaikgeneratoren 1a, 1b eintritt.

Ein Betriebszustand im Sinne der Erfindung ist dann gegeben, wenn:
- ein Halbleiterschalter des entsprechenden DC/DC-Wandlers 2a, 2b getaktet wird oder
- der Halbleiterschalter permanent nicht getaktet wird und permanent geöffnet ist oder
- ein Halbleiterschalter des entsprechenden DC/DC-Wandlers 2a, 2b nicht getaktet wird und permanent geschlossen ist oder
- ein zusätzlicher Überbrückungsschalter permanent geöffnet oder permanent geschlossen ist.

Kombinationen dieser Betriebszustände sind ebenfalls möglich.

### BEZUGSZEICHENLISTE

- 1a, 1b: Photovoltaikgeneratoren
- 2a, 2b: DC/DC-Wandler
- 3: DC/AC-Wandler
- 4: Netz
- 5: Multi-String-Gerät
- 6: Photovoltaikanlage
- Czwk: Zwischenkreiskondensator
- SA, SB: Strings
- LV: Leistungsverhältnis
- LH, LT: Drossel
- DH, DT: Diode
- SH, ST: Halbleiterschalter
- Cze: Zeta-Wandler-Kondensator
- Cse: Sepic-Wandler-Kondensator
- Lze1: erste Zeta-Wandler-Drossel
- Lze2: zweite Zeta-Wandler-Drossel
- Lse1: erste Sepic-Wandler-Drossel
- Lse2: zweite Sepic-Wandler-Drossel
- Dze: Zeta-Wandler-Diode
- Dse: Sepic-Wandler-Diode
- Sze: Zeta-Wandler-Halbleiterschalter
- Sse: Sepic-Wandler-Halbleiterschalter
- Sz: Zusatzschalter

## Patentansprüche

1. Verfahren zur Ansteuerung eines Multi-String-Wechselrichters für Photovoltaikgeneratoren (1a, 1b) einer Photovoltaikanlage (6),
- wobei der Multi-String-Wechselrichter für jeden Photovoltaikgenerator (1a, 1b) eingangsseitig einen separaten DC/DC-Wandler (2a, 2b) umfasst, der als Hochsetzsteller ausgeführt ist,
- sowie jeder Ausgang der DC/DC-Wandler (2a, 2b) parallel geschaltet und über einen Zwischenkreis, an dem eine Zwischenkreisspannung (Uzwk) anliegt, mit einem Eingang eines DC/AC-Wandlers (3) verbunden ist,
- und der DC/AC-Wandler (3) zur Netzeinspeisung mit einem Wechselstromnetz (4) verbunden ist,
**dadurch gekennzeichnet,**
- **dass** an jedem DC/DC-Wandler (2a, 2b) eine oder mehrere elektrische Größen, und zwar Eingangsstrom, Eingangsspannung und/oder Eingangsleistung gemessen werden
- und in Abhängigkeit der gemessenen Größen zumindest ein erster Wandler der DC/DC-Wandler (2a, 2b) bei Überschreiten eines Grenzwertes und/oder Fensters seinen Betriebszustand dadurch ändert, dass der erste Wandler deaktiviert wird, wenn eine Eingangsspannung des ersten Wandlers oberhalb einer Netzkuppenspannung und oberhalb der Eingangsspannung der übrigen Wandler liegt, und
- weitere der DC/DC-Wandler (2a, 2b) deaktiviert werden, wenn deren Eingangsspannungen innerhalb eines gemeinsamen Spannungsfensters mit dem ersten Wandler liegen,
wobei der Arbeitspunkt der Photovoltaikgeneratoren der deaktivierten Wandler über den DC/AC-Wandler (3) optimiert wird,
- so dass die Energieausbeute der Photovoltaikanlage (6) erhöht wird.

2. Verfahren nach Anspruch 1,
**dadurch gekennzeichnet,**
**dass** zumindest einer der DC/DC-Wandler (2a, 2b) seinen Betriebszustand ändert, indem ein Schaltelement des DC/DC-Wandlers (2a, 2b) nicht permanent angesteuert wird und so abgeschaltet wird, dass seine Eingangsspannung im Wesentlichen seiner Ausgangsspannung entspricht.

3. Verfahren nach einem der Ansprüche 1 oder 2,
**dadurch gekennzeichnet,**
**dass** mindestens zwei DC/DC-Wandler (2a, 2b) abgeschaltet werden, wenn an mindestens den beiden DC/DC-Wandlern (2a, 2b) eine Eingangsspannung anliegt, die oberhalb der Netzkuppenspannung liegt.

4. Verfahren nach einem der Ansprüche 1 bis 3,
**dadurch gekennzeichnet,**
**dass** mindestens einer der DC/DC-Wandler (2a, 2b) wieder aktiviert wird, wenn die Eingangsspannung des DC/AC-Wandlers (3) in den Bereich der Netzkuppenspannung fällt, wenn ein Leistungsverhältnis der Photovoltaikgeneratoren (1a, 1b) sich oberhalb eines Grenzwertes ändert und/oder wenn eine definierte Zeit abgelaufen ist.

5. Verfahren nach einem der vorhergehenden Ansprüche,
**dadurch gekennzeichnet,**
**dass** ein Maximum Power Tracking mit einer Verschattungserkennung für die Photovoltaikgeneratoren (1a, 1b) eingesetzt wird, so dass bei mehreren Leistungsmaxima der günstigere Arbeitspunkt eingestellt wird.

6. Verfahren nach einem der vorhergehenden Ansprüche,
**dadurch gekennzeichnet,**
**dass** in Abhängigkeit von den Betriebszuständen der DC/DC-Wandler (2a, 2b) eine Teilverschattung der Photovoltaikgeneratoren (1a, 1b) erkannt wird.

7. Verfahren nach einem der vorhergehenden Ansprüche,
**dadurch gekennzeichnet,**
**dass** zwischen mehreren Maximum Power Tracking Verfahren umgeschaltet wird.

8. Verfahren nach einem der vorhergehenden Ansprüche,
**dadurch gekennzeichnet,**
**dass** in einem inaktiven Betriebszustand zumindest in einem der DC/DC-Wandler (2a, 2b) ein zusätzlicher Schalter zur Überbrückung eines Halbleiterschalters (SH, ST, Sze, Sse), einer Diode (DH, DT, Dze, Dse) und/oder einer Drossel (LH, LT, Lze2, Lse1) eingeschaltet wird.

## Claims

1. A method for controlling a multi-string inverter for photovoltaic generators (1a, 1b) of a photovoltaic system (6),
- the multi-string inverter comprising on the input side for each photovoltaic generator (1a, 1b) a separate DC/DC converter (2a, 2b) designed as a boost converter,
- and each output of the DC/DC converters (2a, 2b) being connected in parallel and connected to an input of a DC/AC converter (3) via an intermediate circuit at which an intermediate circuit voltage (Uzwk) is present,
- and the DC/AC converter (3) being connected to an alternating current grid (4) for feed in,
**characterized in that**
- one or more electrical properties, namely input current, input voltage and/or input power, are measured at each DC/DC converter (2a, 2b)
- and, as a function of the measured properties, at least a first converter of the DC/DC converters (2a, 2b) changes its operating state upon exceeding a limit value and/or a range by deactivating the first converter if an input voltage of the first converter is above a grid peak voltage and above the input voltage of the remaining converters, and
- further of the DC/DC converters (2a, 2b) are deactivated if their input voltages lie within a voltage range common with the first converter,
wherein the operating point of the photovoltaic generators of the deactivated converters are optimized via the DC/AC converter (3),
- so that the energy yield of the photovoltaic system (6) is increased.

2. The method according to claim 1, **characterized in that** at least one of the DC/DC converters (2a, 2b) changes its operating state by a switching element of the DC/DC converter (2a, 2b) not being permanently driven and being switched off in such a way that its input voltage substantially corresponds to its output voltage.

3. The method according to one of the claims 1 or 2, **characterized in that** at least two DC/DC converters (2a, 2b) are switched off if an input voltage above the grid peak voltage is present at at least the two DC/DC converters (2a, 2b).

4. The method according to one of the claims 1 to 3, **characterized in that** at least one of the DC/DC converters (2a, 2b) is reactivated when the input voltage of the DC/AC converter (3) falls close to the grid peak voltage, when a power ratio of the photovoltaic generators (1a, 1b) changes above a limit value and/or when a specified time has elapsed.

5. The method according to one of the preceding claims, **characterized in that** maximum power tracking with shadowing detection is used for the photovoltaic generators (1a, 1b) so that the optimal operating point is set in case of multiple power maxima.

6. The method according to one of the preceding claims, **characterized in that** partial shading of the photovoltaic generators (1a, 1b) is detected as a function of the operating states of the DC/DC converters (2a, 2b).

7. The method according to one of the preceding claims, **characterized in that** interchange is made between several Maximum Power Tracking methods.

8. The method according to one of the preceding claims, **characterized in that**, in an inactive operating state, an additional switch for bridging a semiconductor switch (SH, ST, Sze, Sse), a diode (DH, DT, Dze, Dse) and/or a choke (LH, LT, Lze2, Lse1) is switched on at least in one of the DC/DC converters (2a, 2b).

## Revendications

1. Procédé de commande d'un onduleur multi-string pour générateurs photovoltaïques (1a, 1b) d'une installation photovoltaïque (6),
- l'onduleur multi-string comprenant pour chaque générateur photovoltaïque (1a, 1b) du côté entrée un convertisseur CC/CC séparé (2a, 2b) qui est conçu comme convertisseur élévateur,
- et chaque sortie des convertisseurs CC/CC (2a, 2b) est connectée en parallèle et est connectée à une entrée d'un convertisseur CC/CA (3) via un circuit intermédiaire auquel une tension de circuit intermédiaire (Uzwk) est appliquée,
- et le convertisseur CC/CA (3) est raccordé à un réseau de courant alternatif (4) pour l'alimentation du réseau,
**caractérise**
- **en ce qu'**une ou plusieurs grandeurs électriques, à savoir le courant d'entrée, la tension d'entrée et/ou la puissance d'entrée, sont mesurées à chaque convertisseur CC/CC (2a, 2b)
- et, en fonction des grandeurs mesurées, au moins un premier convertisseur des convertisseurs CC/CC (2a, 2b) change son état de fonctionnement lorsqu'une valeur limite et/ou une fenêtre est dépassée en désactivant le premier convertisseur si une tension d'entrée du premier convertisseur est supérieure à une tension de crête du réseau et supérieure à la tension d'entrée des autres convertisseurs, et
- les autres des convertisseurs CC/CC (2a, 2b) sont désactivés si leurs tensions d'entrée se trouvent dans une fenêtre de tension commune avec le premier convertisseur,
le point de fonctionnement des générateurs photovoltaïques des convertisseurs désactivés étant optimisé par le convertisseur CC/CA (3),
- de sorte que la production d'énergie de l'installation photovoltaïque (6) soit augmenté.

2. Procédé selon la revendication 1,
**caractérise**
**en ce qu'**au moins l'un des convertisseurs CC/CC (2a, 2b) change son état de fonctionnement par un élément de commutation du convertisseur CC/CC (2a, 2b) qui n'est pas activé en permanence et qui est coupé de telle manière que sa tension d'entrée correspond essentiellement à sa tension de sortie.

3. Procédé selon l'une des revendications 1 ou 2,
**caractérise**
**en ce qu'**au moins deux convertisseurs CC/CC (2a, 2b) sont désactivés si une tension d'entrée supérieure à la tension de crête du réseau est présente sur au moins les deux convertisseurs CC/CC (2a, 2b).

4. Procédé selon l'une des revendications 1 à 3,
**caractérise**
**en ce qu'**au moins l'un des convertisseurs CC/CC (2a, 2b) est réactivé lorsque la tension d'entrée du convertisseur CC/CA (3) se situe dans la plage de la tension de crête du réseau, lorsqu'un rapport de puissance des générateurs photovoltaïques (1a, 1b) dépasse une valeur limite et/ou lorsqu'un temps défini est écoulé.

5. Procédé selon l'une des revendications précédentes,
**caractérise**
**en ce que** l'on utilise pour les générateurs photovoltaïques (1a, 1b) une poursuite du point de puissance maximale avec détection d'ombrage, de sorte que le point de fonctionnement le plus favorable est réglé pour une pluralité de maxima de puissance.

6. Procédé selon l'une des revendications précédentes,
**caractérise**
**en ce que** un ombrage partiel des générateurs photovoltaïques (1a, 1b) est détecté en fonction des états de fonctionnement des convertisseurs CC/CC (2a, 2b).

7. Procédé selon l'une des revendications précédentes,
**caractérise**
**en ce qu'**on commute entre plusieurs méthodes de poursuite du point de puissance maximale.

8. Procédé selon l'une des revendications précédentes,
**caractérise**
**en ce que**, dans un état de fonctionnement inactif, un commutateur supplémentaire pour ponter un commutateur semi-conducteur (SH, ST, Sze, Sse), une diode (DH, DT, Dze, Dse) et/ou une self (LH, LT, Lze2, Lse1) est activé dans au moins un convertisseur CC/CC (2a, 2b).
